# DEMANDE DE BREVET EUROPEEN

(11) **EP 0 826 487 A1**
(43) Date de publication de la demande: **04.03.1998**
(21) Numéro de dépôt: 97420152.7
(22) Date de dépôt: 28.08.1997
(51) Int. Cl.: B32B 1/02, B32B 27/08

(54) **Corps creux en matière synthétique obtenu par une technique d'extrusion-soufflage**

(30) Priorité: 30.08.1996 FR 9610807
(71) Demandeur: GRAHAM PACKAGING FRANCE, F-01150 Blyes (FR)
(72) Inventeur: Lazzarini, Henri, 01780 Saint Denis En Bugey (FR)
(74) Mandataire: Maureau, Philippe

(57) **Abrégé**

Ce corps creux est caractérisé en ce qu'il comporte, de l'intérieur vers l'extérieur :
- une couche (9) de matériau barrière,
- une couche (10) d'adhésif,
- une couche (12) d'une résine procurant la résistance mécanique au corps creux,
- une couche (13) de matière synthétique broyée et recyclée,
- un film (14) d'un matériau synthétique de revêtement.

Application à la réalisation de bidons pour le conditionnement de liquides à usage industriel.

## Description

La présente invention a pour objet un corps creux en matière synthétique, tel qu'un récipient en forme de bidon obtenu par une technique d'extrusion-soufflage et présentant plusieurs couches superposées de matériaux différents.

Des corps creux en matière synthétique en forme de bidon sont utilisés notamment pour des applications industrielles, pour contenir des fluides tels que liquides ou poudres présentant une certaine agressivité d'un point de vue chimique.

Il doit être noté qu'un corps creux en matière synthétique, tel qu'un bidon obtenu par une technique d'extrusion-soufflage, génère des chutes importantes pouvant atteindre 20 à 50 % de la quantité de matière synthétique mise en oeuvre, résultant des coupes réalisées en dessous du fond du récipient, après fermeture de ce fond par soudure, et au niveau du col du récipient.

Afin d'essayer de tirer profit de ces chutes, il est connu de rebroyer la matière synthétique résultant de celles-ci, et de la recycler pour la réalisation de nouveaux corps creux, ces chutes constituant une couche du corps creux multicouches.

Une première solution connue consiste à réaliser un corps creux en matière synthétique comprenant, de l'intérieur du corps creux vers l'extérieur de celui-ci, une couche de matière synthétique vierge telle que du polyéthylène ou du polypropylène, une couche d'adhésif, une couche d'un matériau barrière tel que polyamide ou éthylène vinyle alcools (EVOH), une couche d'adhésif, une couche de matériau synthétique recyclée et rebroyée, et une couche externe en matière synthétique vierge, telle que polyéthylène ou polypropylène.

Les couches intérieure et extérieure en polyéthylène ou polypropylène ont une épaisseur de l'ordre de 200 à 500 micromètres.

Ce type de corps creux tire sa résistance au choc de la couche interne en polyéthylène ou similaire. Toutefois pour certaines applications, le contenu du corps creux dégrade cette couche interne et par conséquent la solidité et la résistance au choc du bidon . Tel est notamment le cas lorsqu'un bidon contient des solvants agressifs.

Pour pallier cet inconvénient, il a été imaginé de placer la couche en matériau barrière au contact du produit contenu dans le corps creux. Il en résulte la configuration suivante : une couche de matériau barrière, une couche d'adhésif, une couche de matériau recyclé et une couche de matière synthétique vierge de 400 à 500 micromètres d'épaisseur, en polyéthylène ou en polypropylène. Les capacités de résistance d'un tel corps creux sont moins bonnes que celles du corps creux précédent, dans la mesure où la résistance aux chocs est faite par les couches internes, la couche barrière étant fine et la couche de matériau recyclé participant aussi à cette résistance. Compte tenu de l'hétérogénéité de cette couche de matériau recyclée, la résistance aux chocs est amoindrie.

En outre, dans le cas où la couche de matériau recyclé se trouve à l'extérieur, est observé un dépôt sur la filière, ce qui entraîne d'une part des pertes de productivité pour nettoyer la filière, et d'autre part une détérioration de la qualité du corps creux si le dépôt se détache et passe dans la matière constitutive du corps creux.

Une solution connue consiste à supprimer purement et simplement la couche de matériau recyclé, ce qui augmente les coûts de production des corps creux.

Le but de l'invention est de fournir un corps creux en matière synthétique, tel qu'un bidon, qui puisse mettre en oeuvre de la matière synthétique recyclée, qui possède une bonne résistance à l'agressivité des liquides contenus dans le récipient, et qui possède une bonne solidité mécanique.

A cet effet, le corps creux qu'elle concerne, obtenu par une technique d'extrusion soufflage, et présentant plusieurs couches superposées de matériaux différents, est caractérisé en ce qu'il comporte, de l'intérieur vers l'extérieur :
- une couche de matériau barrière,
- une couche d'adhésif,
- une couche d'une résine procurant la résistance mécanique au corps creux,
- une couche de matière synthétique broyée et recyclée
- un film d'un matériau synthétique de revêtement.

Cette configuration fournit un corps creux, tel qu'un bidon, qui est beaucoup plus solide que la structure à quatre couches définie précédemment du fait que la couche de résine vierge est plus près de l'intérieur du flacon, et que la couche de produit recyclé qui, par définition, est hétérogène et plus sujette aux cassures, est reportée vers l'extérieur du bidon. En outre, une couche de matière synthétique vierge formant un film étant située à l'extérieur du bidon permet d'éliminer les problèmes liés à l'extrusion des matières synthétiques recyclées.

Selon une caractéristique de l'invention les différentes couches possèdent les épaisseurs respectives suivantes :
- couche de matériau barrière : de 40 à 120 micromètres,
- couche d'adhésif : de 40 à 80 micromètres,
- couche de résine : de 200 à 500 micromètres,
- couche de matière recyclée : de 20 à 50 % de l'épaisseur totale du corps,
- film de revêtement : de 5 à 30 micromètres.

Conformément à une forme d'exécution de ce corps creux le matériau barrière est choisi parmi les polyamides ou éthylène vinyle alcools (EVOH).

Selon d'autres caractéristiques de ce corps creux, la résine procurant la résistance mécanique au corps est choisie parmi les polyéthylène et polypropylène et le film de revêtement est choisi parmi les polyéthylène et polypropylène..

De toute façon l'invention sera bien comprise à l'aide de la description qui suit, en référence au dessin schématique annexé représentant, à titre d'exemple non limitatif, une forme d'exécution d'un corps creux en forme de bidon.
Figure 1 en est une vue en coupe longitudinale en fin de formation;
Figure 2 est une vue en coupe transversale de la paroi du bidon à échelle agrandie selon la ligne II-II de Figure 1.

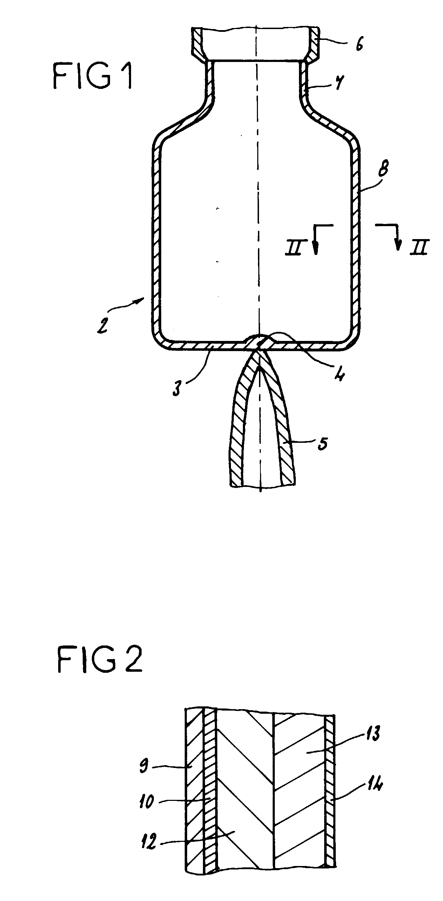

La figure 1 représente un bidon 2 en fin de formation, après que son fond 3 ait été fermé par une soudure 4. La paraison à partir de laquelle a été réalisé le bidon comprend une chute 5 devant être détachée du fond, ainsi qu'une chute 6 devant être détachée du goulot 7 du bidon. Ces chutes 5 et 6 peuvent être recyclées après avoir été broyées.

La figure 2 représente une vue en coupe transversale et à échelle agrandie de la paroi 8 du bidon. Cette paroi comprend cinq couches superposées qui sont coextrudées. Depuis l'intérieur du bidon vers l'extérieur ces couches sont les suivantes :
- une couche barrière 9 d'une épaisseur de 40 à 120 micromètres, réalisée en une matière synthétique vierge, telle qu'en polyamide ou en éthylène vinyle alcool (EVOH);
- une couche d'adhésif 10 d'une épaisseur de l'ordre de 40 à 80 micromètres;
- une couche 12 d'une résine d'une épaisseur de 200 à 500 micromètres, constituée par du polyéthylène ou du polypropylène, assurant la résistance mécanique;
- une couche 13 de matériau recyclé, d'une épaisseur comprise entre 20 à 50 % de l'épaisseur totale du corps creux;
- une couche 14 formant un film de revêtement réalisée en une résine vierge, constituée par exemple par du polyéthylène ou du polypropylène, d'une épaisseur de 5 à 30 micromètres..

Cette structure permet de disposer d'un bidon possédant une excellente résistance aux agents agressifs qu'il est susceptible de contenir, compte tenu de la présence de la couche barrière du côté intérieur. La couche résistante étant située relativement près de l'intérieur du bidon assure une bonne tenue mécanique de celui-ci. La couche de matériau recyclé étant située à l'extérieur permet d'améliorer les qualités mécaniques du bidon, sans aucun dommage pouvant résulter de l'hétérogénéité du matériau, dans la mesure où cette couche est située suffisamment à l'extérieur. Enfin, la couche extérieure étant réalisée en une matière synthétique vierge, il n'y a pas de risque de collage sur la paroi de la filière.
Comme il va de soi l'invention ne se limite pas à la seule forme d'exécution de ce corps creux en matière synthétique décrite ci-dessus à titre d'exemple, elle en embrasse au contraire toutes les variantes. C'est ainsi notamment que les couches de polyéthylène et de polypropylène pourraient être remplacées par un autre matériau possédant des propriétés similaires sans que l'on sorte pour autant du cadre de l'invention.

## Revendications

1. Corps creux en matière synthétique, obtenu par une technique d'extrusion-soufflage et présentant plusieurs couches superposées de matériaux différents, caractérisé en ce qu'il comporte, de l'intérieur vers l'extérieur :
- une couche (9) de matériau barrière,
- une couche (10) d'adhésif,
- une couche (12) d'une résine procurant la résistance mécanique au corps creux,
- une couche (13) de matière synthétique broyée et recyclée
- un film (14) d'un matériau synthétique de revêtement.

2. Corps creux en matière synthétique selon la revendication 1 , caractérisé en ce que les différentes couches possèdent les épaisseurs respectives suivantes :
- couche (9) de matériau barrière : de 40 à 120 micromètres,
- couche (10) d'adhésif: de 40 à 80 micromètres,
- couche (12) de résine : de 200 à 500 micromètres,
- couche (13) de matière recyclée : de 20 à 50 % de l'épaisseur totale du corps,
- film (14) de revêtement : de 5 à 30 micromètres.

3. Corps creux en matière synthétique selon l'une quelconque des revendications 1 et 2, caractérisé en ce que le matériau barrière est choisi parmi les polyamides ou éthylène vinyle alcools (EVOH)

4. Corps creux en matière synthétique selon l'une quelconque des revendications 1 à 3, caractérisé en ce que la résine procurant la résistance mécanique au corps est choisie parmi les polyéthylène et polypropylène.

5. Corps creux en matière synthétique selon l'une quelconque des revendications 1 à 4, caractérisé en ce que le film de revêtement est choisi parmi les polyéthylène et polypropylène.
